**Europäisches Patentamt**

**European Patent Office**

**Office européen des brevets**

(19)

(11) Veröffentlichungsnummer : **0 459 970 A1**

## (12) EUROPÄISCHE PATENTANMELDUNG

(21) Anmeldenummer : **91890076.2**

(22) Anmeldetag : **12.04.91**

(51) Int. Cl.⁵ : **C04B 35/54, F27B 9/00, F27B 9/04, C01B 31/04**

(30) Priorität : **31.05.90 AT 1180/90**

(43) Veröffentlichungstag der Anmeldung : **04.12.91 Patentblatt 91/49**

(84) Benannte Vertragsstaaten : **BE DE ES FR GB IT SE**

(71) Anmelder : **VOEST-ALPINE MACHINERY, CONSTRUCTION & ENGINEERING GESELLSCHAFT m.b.H. Lunzerstrasse 78 A-4031 Linz (AT)**

(72) Erfinder : **Holuigue, Claude, Ing. 3808 Route du Plateau d'Assy F-74190 Le Fayet (FR)**
Erfinder : **Panholzer, Heinrich, Dipl.-Ing. Dr. Brantnerweg 9/18 A-4020 Linz (FR)**

(74) Vertreter : **Hübscher, Heiner, Dipl.-Ing. et al Spittelwiese 7 A-4020 Linz (AT)**

(54) **Verfahren und Vorrichtung zum Graphitieren von Kohlenstoffkörpern.**

(57)   Zum Graphitieren von Kohlenstoffkörpern (2) werden diese in einem Graphitierungsofen stirnseitig zu einem horizontalen Strang (1) zusammengespannt und in einer Graphitierungszone (6) durch Stromzufuhr erwärmt, bevor sie in einer Kühlzone (8) abgekühlt werden. Der Strang (1) wird dabei am Ofeneingang (11) durch ein Ansetzen einzelner Kohlenstoffkörper (2) laufend ergänzt und am Ofenausgang (12) durch ein Abnehmen der graphitierten Kohlenstoffkörper (2) laufend verkürzt. Um hinsichtlich der Strangführung vorteilhafte Verhältnisse sicherzustellen, durchläuft der Strang (1) wenigstens in einem Abschnitt der Kühlzone (8) eine kohlenstoffhältige Schüttung (9), während er außerhalb der Schüttung unter Schutzgasatmosphäre zumindest weitgehend freitragend geführt wird.

EP 0 459 970 A1

Jouve, 18, rue Saint-Denis, 75001 PARIS

# FIG.1

Die Erfindung bezieht sich auf ein Verfahren zum Graphitieren von Kohlenstoffkörpern, die zur Förderung durch einen Graphitierungsofen stirnseitig aneinandergesetzt und zu einem horizontalen Strang zusammengespannt werden, der in einer Graphitierungszone durch Stromzufuhr erwärmt und anschließend in einer Kühlzone gekühlt wird, wobei der Strang in Abhängigkeit von seiner Förderung durch den Graphitierungsofen am Ofeneingang durch ein Ansetzen einzelner Kohlenstoffkörper laufend ergänzt und am Ofenausgang durch ein Abnehmen einzelner Kohlenstoffkörper laufend verkürzt wird, sowie auf eine Vorrichtung zur Durchführung des Verfahrens.

Zum Graphitieren von vorgebrannten Kohlenstoffkörpern werden diese stirnseitig zu einem Strang zusammengespannt und mit Hilfe von elektrischem Strom, der durch einen Längsabschnitt des Stranges geleitet wird, auf die erforderliche Graphitierungstemperatur erwärmt. Um ein fortlaufendes Graphitierungsverfahren sicherzustellen, wird dabei der Strang in Förderschritten durch einen Graphitierungsofen gefördert, wobei nach jedem Förderschritt der Strang am Ofeneingang durch einen zu graphitierenden Kohlenstoffkörper ergänzt wird, während gleichzeitig am Ofenausgang ein bereits graphitierter Kohlenstoffkörper vom Strang abgenommen wird. Für diese fortlaufende Graphitierung stirnseitig aneinandergesetzter Kohlenstoffkörper eignen sich insbesondere Graphitierungsöfen mit horizontaler Ofenachse, was jedoch eine entsprechende Abstützung des horizontal geführten Stranges erfordert. Zu diesem Zweck ist es bekannt, den Graphitierungsofen mit einer kohlenstoffhältigen Schüttung, beispielsweise aus Koks oder Ruß, zu füllen, die nicht nur die notwendige Unterstützung des Stranges aus Kohlenstoffkörpern mit sich bringt, sondern auch eine oxidierende Ofenatmosphäre vermeidet. Nachteilig bei einer solchen Schüttung ist allerdings, daß sie in der Graphitierungszone zwangsläufig mit den zu graphitierenden Kohlenstoffkörpern aufgewärmt werden muß, was den Energiebedarf vergrößert. Mit zunehmender Temperatur der kohlenstoffhältigen Schüttung verbessert sich außerdem deren elektrische Leitfähigkeit, so daß die Gefahr von zum Strang parallelen Kriechströmen besteht.

Um diese Nachteile zu vermeiden, wurde bereits vorgeschlagen (AT-PS 389 506), den Graphitierungsofen nicht mit einer kohlenstoffhältigen Schüttung zu füllen, sondern mit einer Schutzgasatmosphäre zu versehen und den Strang in einem für eine freitragende Strangführung ausreichenden Ausmaß axial einzuspannen. Diese Maßnahme vermeidet zwar die Nachteile einer Ofenfüllung mit einer kohlenstoffhältigen Schüttung, doch müssen erhebliche, von der Länge des Stranges abhängige Einspannkräfte für die freitragende Strangführung mit der Maßgabe aufgebracht werden, daß beim Ansetzen neuer Kohlenstoffkörper an den Strang bzw. beim Abnehmen bereits graphitierter Kohlenstoffkörper vom Strang diese Einspannkräfte erhalten bleiben, was den Konstruktionsaufwand zusätzlich vergrößert.

Der Erfindung liegt somit die Aufgabe zugrunde, ein Verfahren zum Graphitieren von Kohlenstoffkörpern der eingangs geschilderten Art so auszugestalten, daß die Vorteile der Graphitierung unter Schutzgasatmosphäre ausgenützt werden können, ohne den hiefür erforderlichen Aufwand in Kauf nehmen zu müssen.

Die Erfindung löst die gestellte Aufgabe dadurch, daß der Strang bei seiner Förderung durch den Graphitierungsofen wenigstens in einem Abschnitt der Kühlzone eine kohlenstoffhältige Schüttung, außerhalb der Schüttung jedoch eine Schutzgasatmosphäre durchläuft und zumindest im Bereich der Graphitierungszone zwischen den Stromanschlüssen freitragend geführt wird.

Durch die Teilfüllung des Graphitierungsofens mit einer kohlenstoffhältigen Schüttung kann die damit verbundene Abstützung des horizontalen Stranges stirnseitig aneinandergereihter Kohlenstoffkörper vorteilhaft ausgenützt werden, was eine erhebliche Verminderung der für eine freitragende Strangführung außerhalb der Schüttung erforderlichen axialen Einspannkräfte mit sich bringt. Damit wird einerseits der für das Aufbringen der Einspannkräfte erforderliche Aufwand herabgesetzt und anderseits die Möglichkeit geschaffen, die Stranglänge für eine vorgegebene maximale Axialbelastung zu vergrößern. Da die Schüttungen im Bereich der Kühlzone des Graphitierungsofens vorgesehen sind, treten deren in der Graphitierungszone wirksamen Nachteile hinsichtlich der Miterwärmung mit den zu graphitierenden Kohlenstoffkörpern und hinsichtlich des Auftretens von strangparallelen Kriechströmen nicht auf. In der Graphitierungszone des Ofens ist ja eine Schutzgasatmosphäre vorgesehen, so daß die Vorteile der Schüttung und der Schutzgasatmospähre benützt werden, ohne deren Nachteile in Kauf mehmen zu müssen.

Die Ofenfüllung mit einer kohlenstoffhältigen Schüttung im Bereich der Kühlzone kann außerdem zu einer Verbesserung der Strangkühlung ausgenützt werden, beispielsweise dann, wenn der Strang in der Kühlzone zunächst einen Abschnitt mit der Schüttung und dann auslaufseitig einen Abschnitt mit einer Schutzgasatmosphäre durchläuft. Durch diese Maßnahme wird nämlich erreicht, daß im Anschluß an die Graphitierungszone die Wärme vor allem durch Wärmeleitung und nicht wie bei einer Schutzgasatmosphäre durch Strahlung abgeführt wird, was wegen der bei den hohen Temperaturen im Anschluß an die Graphitierungszone gegenüber der Wärmestrahlung geringeren Wärmeleitung über die Schüttung zu einer für die Kohlenstoffkörper vorteilhaften Abschwächung des Kühlvorganges führt, bis die Temperatur der Kohlenstoffkörper auf ein Maß verringert ist, das eine schnellere Abkühlung ohne Beeinträchtigung der Qualität der graphitierten Kohlenstoffkörper in einer Schutzgasatmosphäre zuläßt. In einem niedrigeren Temperaturbereich wird zwar die Wärmeabfuhr durch Wärmeleitung wieder wirkungsvoller als durch Wärmestrahlung, doch werden im allgemeinen die graphitierten Kohlenstoffkörper dem Ofen bereits oberhalb dieses Temperaturbereiches entnommen.

Die freitragende Strangführung kann in vorteilhafter Weise dadurch unterstützt werden, daß die Kohlenstoffkörper beim Aneinandersetzen durch axiale Dübel oder Schraubbolzen stirnseitig verbunden werden, so daß eine gegenseitige radiale Versetzung der aneinanderstoßenden Kohlenstoffkörper wirksam verhindert wird. Diese stirnseitige Verbindung der Kohlenstoffkörper des Stranges erlaubt nicht nur eine weitere Verminderung der für eine freitragende Strangführung außerhalb der Schüttung erforderlichen axialen Einspannkräfte für den Strang, sondern schafft eine vorteilhafte Voraussetzung dafür, diese auf den Strang ausgeübten axialen Druckkräfte während des Ansetzens und Abhebens von Kohlenstoffkörpern zumindest teilweise aufzuheben, insbesondere dann, wenn die freitragende Stranglänge sich auf zwei oder höchstens drei Kohlenstoffkörper beschränkt.

Neben oder an Stelle der stirnseitigen Verbindung der Kohlenstoffkörper kann aber auch eine Strangabstützung im Bereich der freitragenden Strangführung während des Nachlassens der axialen Einspannkräfte vorgenommen werden, um ein unzulässiges Durchhängen oder Auseinanderfallen des Stranges zu vermeiden. Es muß ja sichergestellt werden, daß beim Aufbringen der axialen Einspannkräfte die Kohlenstoffkörper selbst bei einem Durchhängen des Stranges wieder in die gestreckte Stranglage zurückgedrückt werden, was bei einem vergleichsweise geringen Ausknicken der Kohlenstoffkörper aus der gestreckten Stranglage nach unten durchaus auch für den Fall gegeben ist, daß keine axiale Verbindung vorgesehen wird. Für die Abstützung des Stranges im Bereich der während der Strangförderung freitragenden Strangführung ist es folglich nicht erforderlich, heb- und senkbare Abstützungen vorzusehen, obwohl auch solche möglich sind. Es genügt, wenn die Kohlenstoffkörper des Stranges im Bereich der freitragenden Strangführung auf wenigstens einer Abstützung aufgelegt werden können, die mit einem entsprechenden Führungsspiel unterhalb des freitragend geführten Stranges angeordnet wird, so daß beim Nachlassen der axialen Druckkräfte auf den Strang die Kohlenstoffkörper nur geringfügig nach unten ausknicken, bis sie abgestützt werden. Das Führungsspiel ist ja lediglich erforderlich, um eine reibungsfreie Strangförderung sicherzustellen.

Die Art und Anzahl der Abstützungen richtet sich naturgemäß nach der Anzahl und Größe der abzustützenden Kohlenstoffkörper und damit nach der Länge der freitragenden Strangführung, die im Hinblick auf die Stromführung vor allem zwischen den Stromanschlüssen vorzusehen sein wird. Die Stromanschlüsse können dabei vorteilhaft selbst zur Strangabstützung verwendet werden, wobei der gegenseitige Abstand der Stromanschlüsse für die Auswahl der Strangabstützung zwischen den Stromanschlüssen eine entscheidende Rolle spielt. Besonders vorteilhafte Bedingungen hinsichtlich der Strangabstützung ergeben sich, wenn der gegenseitige Abstand der Stromanschlüsse der Länge zweier Kohlenstoffkörper entspricht, weil in diesem Fall höchstens ein Kohlenstoffkörper zwischen den in den Stromanschlüssen abgestützten Kohlenstoffkörpern gehalten werden muß.

Die Stromleitung durch den Strang wird durch die gegebenenfalls vorgesehenen Verbindungsdübel oder -bolzen nicht beeinträchtigt, weil die Stromführung in den äußeren Schichten zur Stromleitung ausreicht. Die Dübel oder Schraubbolzen sollen jedoch die Materialeinheit des Stranges nicht beeinträchtigen. Aus diesem Grunde empfiehlt es sich, die axialen Dübel oder Schraubbolzen zum stirnseitigen Verbinden der einzelnen Kohlenstoffkörper des Stranges aus kohlenstofffaserverstärktem Kohlenstoff herzustellen, der aufgrund seiner Faserverstärkung die notwendigen Festigkeitseigenschaften aufweist. Da die axiale Verbindung der Kohlenstoffkörper im allgemeinen im Bereich der späteren Halterungsausnehmungen der als Elektroden eingesetzten Kohlenstoffkörper liegt, ergeben sich durch die Bohrungen für die axiale Verbindung keine Materialverluste zufolge der Aufnahmebohrungen für die Dübel bzw. Schraubbolzen.

Zur Durchführung des Verfahrens kann von einem Graphitierungsofen, der eine Graphitierungszone mit wenigstens zwei eine Strangabstützung ergebenden Stromanschlüssen für den Strang aus Kohlenstoffkörpern und eine in Strangdurchlaufrichtung anschließende Kühlzone bildet, sowie von einem Förderer für den Strang mit zwei dem Graphitierungsofen vor-und nachgeordneten, den Strang zwischen sich axial einspannenden Spannköpfen ausgegangen werden, die in Richtung der Ofenachse verstellbar sind, wie dies bei Öfen mit einer durchgehend freitragenden Strangführung in einer Schutzgasatmosphäre bekannt ist. Weist ein solcher Graphitierungsofen im Bereich der Kühlzone zumindest in einem Abschnitt eine Füllung aus einer kohlenstoffhältigen Schüttung und außerhalb der Schüttung, insbesondere im Bereich der Graphitierungszone, eine Schutzgasatmosphäre auf, so kann in diesem Graphitierungsofen die angestrebte Strangführung ohne weiteres sichergestellt werden, weil sich für den Strang im Bereich der Kühlzone die zusätzliche Abstützung durch die Schüttung ergibt, während die Graphitierung unter den Bedingungen einer Schutzgasatmosphäre bei freitragender Strangführung erfolgt. Die Spannköpfe für die axiale Einspannung des Stranges können demnach entsprechend leichter und weniger aufwendig ausgebildet werden, vor allem dann, wenn die Kohlenstoffkörper des Stranges durch axiale Dübel oder Schraubbolzen stirnseitig miteinander verbunden sind, die aufgrund ihres Formschlusses eine radiale Versetzung der Kohlenstoffkörper gegeneinander auch bei geringeren axialen Einspannkräften mit Sicherheit ausschließen.

Zusätzlich zu diesen stirnseitigen Verbindungen, unter bestimmten Voraussetzungen aber auch an Stelle dieser Verbindungen können im Breich der Graphitierungszone zwischen den Stromanschlüssen Abstützungen für den Strang mit einem Führungsspiel unterhalb des umgeknickten Stranges vorgesehen sein, um ein beim Entlasten des Stranges durch die Einspannköpfe zu erwartendes Ausknicken des Stranges der Kohlenstoffkörper nach unten auf ein Maß zu begrenzen, das es beim Aufbringen der Einspannkräfte wieder ermöglicht, die Kohlenstoffkörper in die gestreckte Stranglage zurückzudrücken.

Um bei den Abstützungen unabhängig von der jeweiligen Lage der einzelnen Kohlenstoffkörper zu sein, können die Abstützungen aus zwei beidseits des Stranges strangparallel verlaufenden Holmen bestehen, die zugleich für eine Seitenzentrierung sorgen, wie sie sonst durch Abstützungen mit einer V-förmigen Aufnahme für die Kohlenstoffkörper erreicht wird.

Die teilweise Füllung der Kühlzone des Graphitierungsofens mit einer kohlenstoffhältigen Schüttung kann vorteilhaft auch für die Steuerung des Abkühlungsverlaufes der Kohlenstoffkörper ausgenützt werden, wenn beispielsweise die Kühlzone im Anschluß an die Graphitierungszone einen Abschnitt mit einer solchen Schüttung und einen daran anschließenden Abschnitt mit einer Schutzgasatmosphäre aufweist. Die kohlenstoffhältige Schüttung verlangsamt nämlich die Wärmeabfuhr gegenüber der bei höheren Temperaturen in einer Schutzgasatmosphäre wirksam werdenden Wärmestrahlung, was für die Qualität der graphitierten Kohlenstoffkörper von Bedeutung ist. Erst nach der Abkühlung auf ein bestimmtes Temperaturniveau können die Kohlenstoffkörper unbeschadet schneller in einer Schutzgasatmosphäre abgekühlt werden, so daß die Länge der Schüttung im Bereich der Kühlzone entsprechend dem gewünschten Abkühlungsverlauf gewählt werden muß.

Das erfindungsgemäße Verfahren wird im folgenden an Hand der Zeichnung näher erläutert. Es zeigen
Fig. 1 einen erfindungsgemäßen Graphitierungsofen in einem schematischen Längsschnitt,
Fig. 2 einen Querschnitt durch diesen Graphitierungsofen nach der Linie II-II der Fig. 1 in einem größeren Maßstab,

Fig. 3 einen Schnitt nach der Linie III-III der Fig. 1 in einem größeren Maßstab,
Fig. 4 eine mögliche Abstützung des Kohlenstoffkörperstranges im Bereich der freitragenden Strangführung in einer Seitenansicht in einem größeren Maßstab,
Fig. 5 einen Schnitt nach der Linie V-V der Fig. 4,
Fig. 6 eine stirnseitige Dübelverbindung zweier aneinanderstoßender Kohlenstoffkörper des Stranges in einer im Stoßbereich der Kohlenstoffkörper aufgerissenen Seitenansicht des Stranges und
Fig. 7 eine gegenüber der Ausführung nach Fig. 1 abgewandelte Ausführungsform der Kühlzone des Graphitierungsofens in einem Längsschnitt.

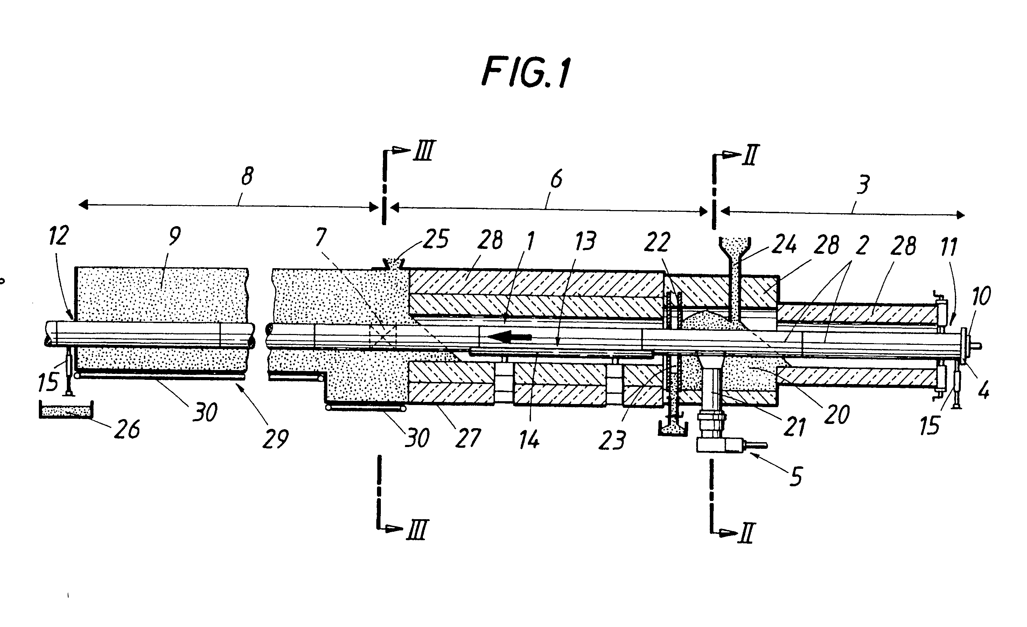

Der Graphitierungsofen gemäß Fig. 1 bildet für die zu graphitierenden, zu einem horizontalen Strang 1 axial zusammengespannten Kohlenstoffkörper 2 in Durchlaufrichtung des Stranges 1 nacheinander eine Vorwärmzone 3 zwischen zwei Stromanschlüssen 4 und 5, eine Graphitierungszone 6 zwischen den Stromanschlüssen 5 und 7 sowie eine Kühlzone 8. Während der Graphitierungsofen im Bereich der Vorwärmzone 3 und der Graphitierungszone 6 eine Schutzgasatmosphäre aufweist, ist im Bereich der Kühlzone 8 eine Füllung aus einer kohlenstoffhältigen Schüttung 9, beispielsweise aus Koks oder Ruß, vorgesehen, die für eine entsprechende Abstützung des Stranges 1 sorgt.

Die Kohlenstoffkörper 2 des Stranges 1 werden zur schrittweisen Förderung durch den Graphitierungsofen zwischen zwei dem Ofen vor- und nachgeordneten Spannköpfen axial eingespannt, von denen aus Obersichtlichkeitsgründen nur der eingangsseitige Spannkopf 10 angedeutet ist. Die über diese Spannköpfe auf den Strang 1 aufgebrachten, axialen Druckkräfte weisen eine für eine freitragende Strangführung zwischen den Stromanschlüssen 4, 5 und 7 ausreichende Größe auf, so daß im Bereich der Vorwärmzone 3 und der Graphitierungszone 6 zumindest während der Strangförderung keine radiale Strangabstützung zwischen den eine solche Abstützung bildenden Stromanschlüssen erforderlich wird.

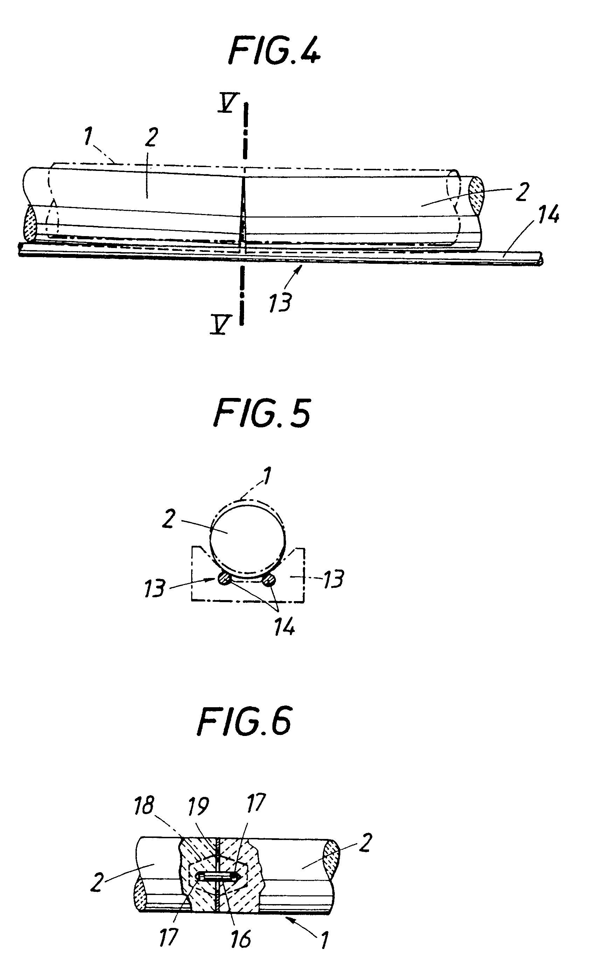

Um zwischen den Förderschritten den Strang 1 am Ofeneingang 11 durch ein Ansetzen einzelner Kohlenstoffkörper 2 laufend zu ergänzen und am Ofenausgang 12 durch ein Abnehmen einzelner Kohlenstoffkörper laufend zu verkürzen, ohne die für die freitragende Strangführung zwischen den tragenden Stromanschlüssen erforderlichen axialen Druckkräfte aufrecht erhalten zu müssen, ist im Bereich der freitragenden Strangführung für eine zusätzliche Abstützung 13 gesorgt, die ein unzulässiges Durchhängen oder Auseinanderfallen des Stranges während des Ansetzens bzw. Abnehmens von Kohlenstoffkörpern verhindert. Diese Abstützung 13 kann gemäß dem Ausführungsbeispiel nach den Fig. 4 und 5 aus zwei strangparallelen, beidseits des Stranges 1 verlaufenden Holmen 14 bestehen, die mit einem Führungsspiel unterhalb der strichpunktiert gezeichneten Strecklage des Stranges 1 verlaufen. Die Kohlenstoffkörper 2 des Stranges 1 finden daher beim Nachlassen der axialen Einspannkräfte auf den Holmen 14 eine seitenzentrierende Abstützung, die ein unzulässiges Durchhängen des Stranges verhindert. Wie die Praxis gezeigt hat, knicken die Kohlenstoffkörper 2 beim Durchhängen des Stranges 1 nach unten unter bildung eines Keilspaltes zwischen den Stirnflächen aus, so daß beim erneuten axialen Einspannen des Stranges 1 die Kohlenstoffkörper 2 wieder in die gestreckte Stranglage zurückgedrückt werden, in der eine reibungsfreie Strangförderung sichergestellt wird. An Stelle der in vollen Linien gezeichneten hohlen oder vollen Holme 14, die selbstverständlich entsprechend temperaturfest ausgebildet sein müssen und daher vorzugsweise aus gegebenenfalls kohlenstoffaserverstärktem Kohlenstoff bestehen, können auch Abstützungen 13 mit V-förmigen Aufnahmen für die Kohlenstoffkörper 2 vorgesehen sein, wie dies in Fig. 5 strichpunktiert angedeutet ist. Die Abstützung der Kohlenstoffköper 2 außerhalb des Graphitierungsofens erfolgt vorzugsweise über heb- und senkbare Auflagen 15, beispielsweise in Scherenform.

Um auf zusätzliche Abstützungen 13 vor allem im Bereich der Graphitierungszone 6 verzichten zu können oder zumindest eine radiale Versetzung der axial aneinanderstoßenden Kohlenstoffkörper 2 zu vermeiden, empfiehlt es sich, die Kohlenstoffkörper 2 stirnseitig durch Dübel 16 zu verbinden, wie dies in der Fig. 6 dargestellt ist. Diese Dübel 16, die durch Schraubbolzen ersetzt werden können, werden vorzugsweise aus kohlenfaserverstärktem Kohlenstoff hergestellt und in stirnseitige Sacklochbohrungen 17 der Kohlenstoffkörper 2 eingesetzt. Da im allgemeinen die graphitierten Kohlenstoffkörper 2 als Elektroden Verwendung finden, die stirnseitig mit Halterungsausnehmungen 18 versehen werden, muß durch das Vorsehen solcher Dübel oder Schraubbolzen kein Materialverlust in Kauf genommen werden, weil ja diese Dübel oder Bolzen im Bereich der späteren Halterungsausnehmungen 18 liegen. Die Stromführung außerhalb der Dübel 16 reicht für einen ausreichenden Stromübergang aus, insbesondere wenn zwischen den Stirnflächen eine ringförmige Kontaktschicht 19 vorgesehen wird.

Während der Stromanschluß 4 im Bereich des Ofeneinganges 11 durch eine stirnseitige Kontaktplatte gebildet werden kann, die durch den Spannkopf 10 an den Strang 1 gepreßt wird, muß für die Stromanschlüsse 5 und 7 die Relativbewegung gegenüber dem Strang 1 berücksichtigt werden. Zu diesem Zweck wird im Bereich der Stromanschlüsse 5 und 7 eine kohlenstoffhältige Schüttung 20 vorgesehen, die im Bereich des Stromanschlusses 7 durch die Kühlzonenschüttung 9 gebildet werden kann. Diese auf einen Längsabschnitt des Stranges 1 begrenzte Schüttung 20 ergibt den erforderlichen Kontakt zwischen den Stromanschlußelektroden 21 und dem Strang 1, ohne die Förderbewegung des Stranges 1 gegenüber den ortsfesten Elektroden 21 zu beeinträchtigen. Die Schüttung 20 wird durch eine Trennwand 22 in Förderrichtung des Stranges 1 begrenzt, wobei das mit dem Strang 1 durch die Trennwand 22 austretende Schüttgut in einer anschließenden Kammer 23 gesammelt wird, um in der anschließenden Graphitierungszone 6 eine schüttungsfreie Schutzgasatmosphäre sicherzustellen. Die Schüttung 20 im Bereich des Stromanschlusses 5 wird wie die Schüttung 9 im Bereich der Kühlzone 8 über Zuführungleitungen 24 bzw. 25 laufend ergänzt, um die austragsbedingten Schüttgutverluste auszugleichen. Für das aus der Kühlzone 8 austretende Schüttgut ist ein Auffangbehälter 26 angedeutet.

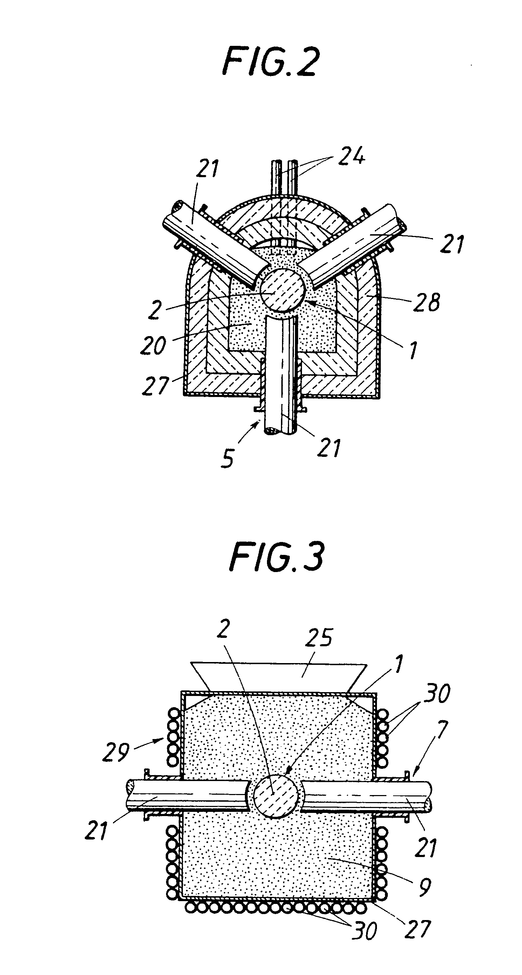

Der durch den Graphitierungsofen geförderte Strang 1 wird im Bereich der Vorwärmzone 3 zwischen den Stromanschlüssen 4 und 5 vorgewärmt und anschließend im Bereich der Graphitierungszone 6 zwischen den Stromanschlüssen 5 und 7 auf die erforderliche Graphitierungstemperatur gebracht. Das Ofengehäuse 27 ist daher im Bereich dieser Zonen mit einer entsprechenden Wärmeisolierung 28 versehen, um Wärmeverluste möglichst zu vermeiden. Im Bereich der Kühlzone 8 soll jedoch die Wärme über das Ofengehäuse 27 abgeführt werden, so daß in diesem Bereich für eine Wärmeabfuhr über die Schüttung 9 und eine Gehäusekühlung 29 in Form von mit einem Kühlmittel durchströmten Kühlrohren 30 gesorgt wird, wie dies insbesondere der Fig. 3 entnommen werden kann.

Werden zum Ansetzen eines neu zu graphitierenden Kohlenstoffkörpers 2 bzw. zum Abnehmen eines bereits graphitierten Kohlenstoffkörpers 2 die Spannköpfe 10 vom Strang 1 entfernt, so wird der Strang 1 durch die Schüttung 9 in der Kühlzone, durch die Schüttung 20 im Bereich des Stromanschlusses 5 und außerhalb des Graphitierungsofens durch die Auflagen 15 gehalten, die vor dem Nachlassen der axialen Druckkräfte angestellt wurden. Reicht diese Strangabstützung insbesondere bei einer stirnseitigen Verbindung der Kohlenstoffkörper 2 durch Dübel 16 oder Schraubbolzen aus, um den Durchhang des Stranges 1 in zulässigen Grenzen zu halten und die Kohlenstoffkörper 2 beim Aufbringen der axialen Einspannkräfte wieder in der vorgesehenen Strecklage des Stranges durch den Graphitierungsofens fördern zu können, so sind keine zusätzlichen Abstützungen im Bereich der freitragenden Strangführung erforderlich. Sonst ist zumindest eine zusätliche Abstützung 13 im Bereich der freitragenden Stangführung vor allem in der Graphitierungszone 6 vorzusehen. Diese zusätzliche Abstüztung 13 begrenzt den auftretenden Durchhang des Stranges im Bereich der freitragenden Strangführung auf ein zulässiges Maß, ohne die Strangförderung in diesem Bereich zu beeinträchtigen. Es können daher die Vorteile der Schutzgasmosphäre im Bereich der stromführenden Abschnitte des Stranges und die Vorteile der Schüttung 9 in der Kühlzone ausgenützt werden, ohne die Nachteile der Schutzgasatmosphäre im Bereich der Kühlzone bzw. der Schüttung im Bereich der Graphitierungszone in Kauf nehmen zu müssen.

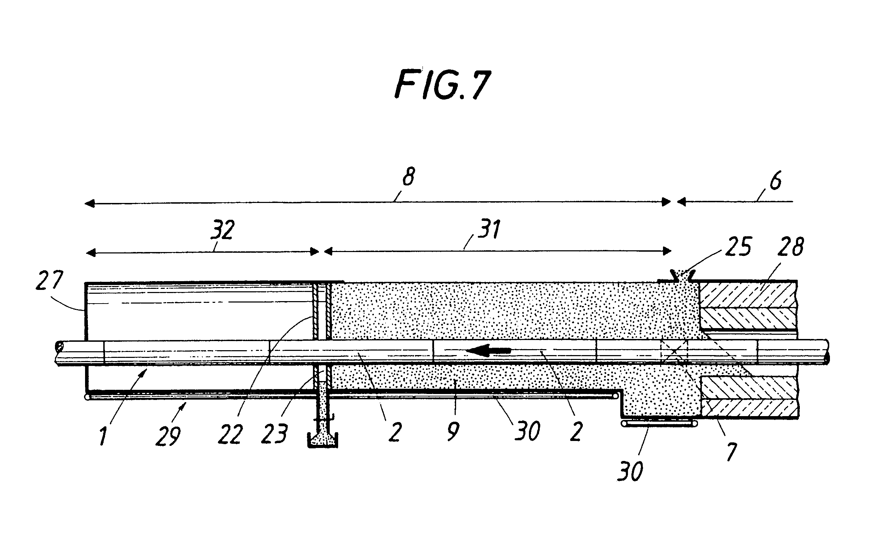

Wie die Fig. 7 zeigt, kann in der Kühlzone 8 lediglich ein an die Graphitierungszone 6 anschließender Abschnitt 31 mit einer Schüttung 9 versehen sein, um einen vorteilhaften Abkühlungsverlauf für die graphitierten Kohlenstoffkörper sicherzustellen. Im Falle des Ausführungsbeispiels nach Fig. 7 wird nämlich der bei höheren Temperaturen gegenüber der Wärmestrahlung schlechtere Wärmeübergang durch Wärmeleitung über die Schüttung 9 ausgenützt, damit der Abkühlungsvorgang im hohen Temperaturbereich auf ein für die Qualität der graphitierten Kohlenstoffkörper vorteilhafteres Maß verlangsamt wird, bis nach dem Erreichen eines bestimmten Temperaturniveaus eine raschere Abkühlung ohen Qualitätsverlust möglich wird. Diese raschere Abkühlung erfolgt über die Wärmestrahlung in einer Schutzgasatmosphäre im Bereich eines auslaufsseitigen Abschnittes 32 der Kühlzone 8, wobei die Abschnitt 31 und 32 wiederum durch eine Trennwand 22 mit einer anschließenden Kammer 23 zur Aufnahme des austretenden Schüttgutes voneinander getrennt sind.

**Patentansprüche**

1. Verfahren zum Graphitieren von Kohlenstoffkörpern (2), die zur Förderung durch einen Graphitierungsofen stirnseitig aneinandergesetzt und zu einem horizontalen Strang (1) zusammengespannt werden, der in einer Graphitierungszone (6) durch Stromzufuhr erwärmt und anschließend in einer Kühlzone (8) gekühlt wird, wobei der Strang (1) in Abhängigkeit von seiner Förderung durch den Graphitierungsofen am Ofeneingang (11) durch ein Ansetzen einzelner Kohlenstoffkörper (2) laufend ergänzt und am Ofenausgang (12) durch ein Abnehmen einzelner Kohlenstoffkörper (2) laufend verkürzt wird, dadurch gekennzeichnet, daß der Strang bei seiner Förderung durch den Graphitierungsofen wenigstens in einem Abschnitt der Kühlzone eine kohlenstoffhältige Schüttung, außerhalb der Schüttung jedoch eine Schutzgasatmosphäre durchläuft und zumindest im Bereich der Graphitierungszone zwischen den Stromanschlüssen freitragend geführt wird.

2. Verfahren nach Anspruch 1, dadurch gekennzeichnet, daß der Strang in der Kühlzone zunächst einen Abschnitt mit der Schüttung und dann auslaufseitig einen Abschnitt mit einer Gasatmosphäre durchläuft.

3. Verfahren nach ANspruch 1 oder 2, dadurch gekennzeichnet, daß die Kohlenstoffkörper zur freitragenden Strangführung beim Aneinandersetzen durch axiale Dübel oder Schraubbolzen stirnseitig verbunden werden.

4. Verfahren nach einem der Ansprüche 1 bis 3, dadurch gekennzeichnet, daß die für die freitragende Strangförderung auf den Strag ausgeübten axialen Druckkräfte während des Ansetzens und Abnehmens von Kohlenstoffkörpern zumindest teilweise aufgehoben werden.

5. Verfahren nach Anspruch 4, dadurch gekennzeichnet, daß die axialen Druckkräfte unter gleichzeitiger Strangabstützung wenigstens im Bereich der freitragenden Strangführung in der Graphitierungszone zumindest teilweise aufgehoben werden.

6. Verfahren nach Anspruch 5, dadurch gekennzeichnet, daß die Kohlenstoffkörper des Stranges im Bereich der freitragenden Strangführung auf wenigstens eine mit einem Führungsspiel unterhalb des freitragend geführten Stranges angeordnete Abstützung aufgelegt werden.

7. Verfahren nach einem der Ansprüche 1 bis 6, dadurch gekennzeichnet, daß der Strang mittels der Stromanschlüsse abgestützt wird.

8. Verfahren nach einem der Ansprüche 1 bis 7, dadurch gekennzeichnet, daß die axialen Dübel oder Schraubbolzen zum stirnseitigen Verbinden der einzelnen Kohlenstoffkörper des Stranges aus kohlenstoffaserverstärktem Kohlenstoff bestehen.

9. Vorrichtung zur Durchführung des Verfahrens nach einem der Ansprüche 1 bis 8, bestehend aus einem Graphitierungsofen, der eine Graphitierungszone mit wenigstens zwei eine Strangabstützung ergebenden Stromanschlüssen für den Strang aus Kohlenstoffkörpern und eine in Strangdurchlaufrichtung anschließende Kühlzone bildet, und aus einem Förderer für den Strang mit zwei dem Graphitierungsofen vor- und nachgeordneten, den Strang zwischen sich axial einspannenden Spannköpfen, die in Richtung der Ofenachse verstellbar sind, dadurch gekennzeichnet, daß der Graphitierungsofen im Bereich der Kühlzone (8) zumindest in einem Abschnitt (31) eine Füllung aus einer kohlenstoffhältigen Schüttung (9) und außerhalb der Schüttung (9), insbesondere im Bereich der Graphitierungszone (6), eine Schutzgasatmosphäre aufweist.

**10.** Vorrichtung nach Anspruch 9, dadurch gekennzeichnet, daß die Kühlzone (8) im Anschluß an die Graphitierungszone (6) einen Abschnitt (31) mit einer Füllung aus einer kohlenstoffhältigen Schüttung (9) und einen daran anschließenden Abschnitt (32) mit einer Schutzgasatmosphäre aufweist.

**11.** Vorrichtung nach Anspruch 9 oder 19, dadurch gekennzeichnet, daß die Kohlenstoffkörper (2) des Stranges (1) gegebenenfalls unter Zwischenlage einer elektrisch leitenden Schicht durch axiale Dübel (16) oder Schraubbolzen stirnseitig miteinander verbunden sind.

**12.** Vorrichtung nach einem der Ansprüche 9 bis 11, dadurch gekennzeichnet, daß im Bereich der Graphitierungszone (6) zwischen den Stromanschlüssen (5, 7) wenigstens eine Abstützung (13) für den Strang (1) mit einem Führungsspiel unterhalb des ungeknickten Stranges (1) vorgesehen ist.

**13.** Vorrichtung nach Anspruch 12, dadurch gekennzeichnet, daß die Abstützung (13) aus zwei beidseits des Stranges (1) strangparallel verlaufenden Holmen (14) besteht.

EP 0 459 970 A1

# FIG.1

# FIG.2

# FIG.3

## FIG.4

## FIG.5

## FIG.6

# FIG.7

EP 0 459 970 A1

Europäisches
Patentamt

**EUROPÄISCHER RECHERCHENBERICHT**

Nummer der Anmeldung

| | EINSCHLÄGIGE DOKUMENTE | | EP 91890076.2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) | |
| D,A | AT - B - 389 506<br>(VOEST-ALPINE MASCHINENBAU GESELLSCHAFT M.B.H)<br>* Gesamt * | 1,9 | C 04 B 35/54<br>F 27 B 9/00<br>F 27 B 9/04<br>C 01 B 31/04 | |
| A | DE - A1 - 3 343 790<br>(VOEST-ALPINE AG)<br>* Gesamt * | 1,9 | | |

**RECHERCHIERTE SACHGEBIETE (Int. Cl⁵)**

C 04 B
F 27 B
C 01 B

Der vorliegende Recherchenbericht wurde für alle Patentansprüche erstellt.

| Recherchenort | Abschlußdatum der Recherche | Prüfer |
|---|---|---|
| WIEN | 02-09-1991 | BECK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82

13